# FASCICULE DE BREVET EUROPEEN

(11) **EP 0 720 930 B1**
(45) Date de publication et mention de la délivrance du brevet: **24.06.1998**
(21) Numéro de dépôt: 96400044.2
(22) Date de dépôt: 08.01.1996
(51) Int. Cl.: B60N 2/22

(54) **Articulation pour siège de véhicule, et siège de véhicule équipé d'une telle articulation**
Gelenkbeschlag für Fahrzeugsitze und Fahrzeugsitz mit einem solchen Beschlag
Hinge mechanism for vehicle seats and vehicle seat equipped with such a hinge

(30) Priorité: 10.01.1995 FR 9500206
(43) Date de publication de la demande: 10.07.1996
(73) Titulaire: BERTRAND FAURE EQUIPEMENTS S.A., 92100 Boulogne (FR)
(72) Inventeur: Baloche, François, F-61100 Flers (FR)
(74) Mandataire: Burbaud, Eric

(56) Documents cités:
- EP-A- 0 502 774
- FR-A- 2 364 784
- FR-A- 2 626 154
- GB-A- 2 241 884

## Description

La présente invention est relative aux articulations pour sièges de véhicules ainsi qu'aux sièges de véhicules équipés de telles articulations.

Plus particulièrement, parmi les articulations connues, l'invention concerne une articulation destinée à équiper un siège de véhicule, notamment automobile, ce siège comprenant une assise et un dossier pivotant par rapport à l'assise, et l'articulation comportant :
- des premier et deuxième flasques, destinés à être solidarisés l'un avec l'assise du siège et l'autre avec le dossier du siège et montés pivotants l'un par rapport à l'autre autour d'un axe de rotation, le deuxième flasque étant solidaire d'une denture qui s'étend sur au moins un arc de cercle centré sur l'axe de rotation et qui est orientée radialement vers l'intérieur,
- au moins un grain pourvu d'une denture extérieure, propre à coopérer avec la denture du deuxième flasque, ce grain étant guidé en coulissement selon une direction radiale, par un guide solidaire du premier flasque, entre d'une part une position d'engagement où le grain coopère avec la denture du deuxième flasque pour bloquer l'articulation, et d'autre part une position effacée où il ne coopère pas avec la denture du deuxième flasque,
- une came pour commander le coulissement du grain, cette came étant sollicitée par des moyens élastiques vers une position de repos où elle place le grain dans sa position d'engagement,
- et un organe de commande pour déplacer la came de sa position de repos vers une position d'actionnement où elle permet au grain de coulisser vers sa position effacée.

De telles articulations sont divulguées par exemple dans le document EP-A-0 502 774.

Les articulations du genre en question peuvent avoir à résister à des couples de pivotement qui sont très élevés, notamment en cas d'accident subi par un véhicule dont les sièges sont équipés de telles articulations.

Par exemple, en cas de choc arrière sur ce véhicule, l'occupant d'un siège tend à être projeté vers l'arrière et donc appuie fortement sur le dossier du siège, ce qui se traduit par un couple élevé exercé sur l'articulation. Ce couple peut atteindre par exemple 200 mdaN.

De même, en cas de choc avant, lorsque le siège est pourvu d'une ceinture dite "embarquée" en liaison mécanique avec la partie haute du dossier, un couple de rotation élevé est exercé sur le dossier du siège et sur l'articulation du fait de la projection de l'occupant du siège vers l'avant, projection qui provoque une forte traction sur la ceinture de sécurité. Le couple subi par l'articulation peut alors atteindre par exemple 550 mdaN.

Lorsqu'une articulation du type mentionné ci-dessus subit de tels couples élevés, les efforts exercés sur le grain du fait de la coopération entre la denture extérieure du grain et la denture intérieure du deuxième flasque, tendent à repousser le grain radialement vers l'intérieur, c'est-à-dire contre la came.

Comme la zone de contact entre la came et le grain est sensiblement ponctuelle, cet effort important peut parvenir à déformer localement le grain et/ou la came, de sorte que le grain peut alors reculer vers sa position effacée en permettant alors un pivotement libre du flasque mobile, pivotement qui présente un danger certain pour l'occupant du siège au cours d'un accident.

Pour remédier à cet inconvénient, la seule solution connue jusqu'alors a consisté à réaliser une articulation plus grosse et plus lourde que la normale, de façon à être plus résistante.

Mais cette solution n'est pas souhaitable, puisqu'elle augmente à la fois le poids et le coût de l'articulation.

La présente invention a notamment pour but de pallier ces inconvénients.

A cet effet, selon l'invention, une articulation du genre en question est caractérisée en ce que le grain présente deux faces de butée opposées qui s'étendent depuis le voisinage de la denture de ce grain jusqu'à un épaulement disposé à l'opposé de ladite denture du grain et situé près de cette denture, au moins les faces de butée du grain présentant une grande résistance mécanique, le guide comportant deux faces de contrebutée qui sont disposées respectivement en regard des deux faces de butée et de leurs épaulements et qui présentent une résistance mécanique inférieure à la résistance des faces de butée, et en ce que, lorsque le grain est dans sa position d'engagement, les faces de butée et de contrebutée en regard sont en contact mutuel sur une surface suffisamment faible pour qu'une des faces de butée du grain pénètre alors dans la face de contrebutée correspondante du guide lorsque l'un des flasques subit un couple de pivotement autour de l'axe de rotation qui est supérieur à un couple minimum prédéterminé.

Ainsi, lorsque l'articulation subit un couple de pivotement très élevé, par exemple en cas d'accident, le grain est bloqué dans sa position d'engagement grâce à la pénétration de la face de butée du grain dans la face de contrebutée du guide.

Après l'accident, l'articulation reste en général bloquée, ce qui implique alors de la remplacer, si toutefois le véhicule est toujours utilisable.

Au cours d'essais expérimentaux d'un exemple particulier d'articulation selon l'invention, on a pu constater qu'une telle articulation pouvait résister, dans cet exemple particulier, à un couple supérieur à 550 mdaN exercé sur le flasque mobile, ce qui est une valeur de couple considérable.

Dans des modes de réalisation préférés de l'articulation selon l'invention, on a recours en outre à l'une et/ou à l'autre des dispositions suivantes :
- le couple minimum prédéterminé est compris entre 50 mdaN et 200 mdaN ;
- le couple minimum prédéterminé est compris entre 100 mdaN et 200 mdaN ;
- la surface de contact entre chaque face de butée et la face de contrebutée correspondante est prévue pour que, lorsque l'axe des flasques subit un couple au moins égal au couple minimum prédéterminé pendant que le grain est dans sa position d'engagement, l'une des faces de butée de ce grain pénètre dans la face de contrebutée correspondante sur une profondeur au moins égale à 0,2 millimètres ;
- la profondeur de pénétration de la face de butée dans la face de contrebutée est comprise entre 0,3 et 0,5 millimètres ;
- le grain se prolonge vers la came par un corps de guidage qui coulisse dans le guide avec un jeu suffisant pour ne pas interférer avec la pénétration susmentionnée d'une des faces de butée du grain dans la face de contrebutée correspondante.

L'invention a également pour objet un siège de véhicule comportant une assise et un dossier qui est monté pivotant par rapport à l'assise par l'intermédiaire d'au moins une articulation telle que définie ci-dessus, ce siège pouvant en outre comporter une ceinture de sécurité qui est en liaison mécanique avec le dossier en un emplacement de ce dossier éloigné de l'assise.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue schématique d'un siège de véhicule automobile équipé d'une articulation selon l'invention,
- la figure 2 est une vue en coupe partielle de l'articulation équipant le siège de la figure 1,
- les figures 3 et 4 sont des vues en coupe de l'articulation de la figure 2, les coupes étant prises respectivement selon les lignes III-III et IV-IV de la figure 2,
- la figure 5 est une vue de détail en coupe montrant la pénétration d'une des faces de butée d'un des grains de l'articulation de la figure 2 dans une des faces de contrebutée du guide qui accueille ce grain, lorsqu'un couple important est exercé sur le flasque mobile de l'articulation,
- et la figure 6 est une vue similaire à la figure 5, pour une variante de l'invention.

Sur les différentes figures, les mêmes références désignent des éléments identiques ou similaires.

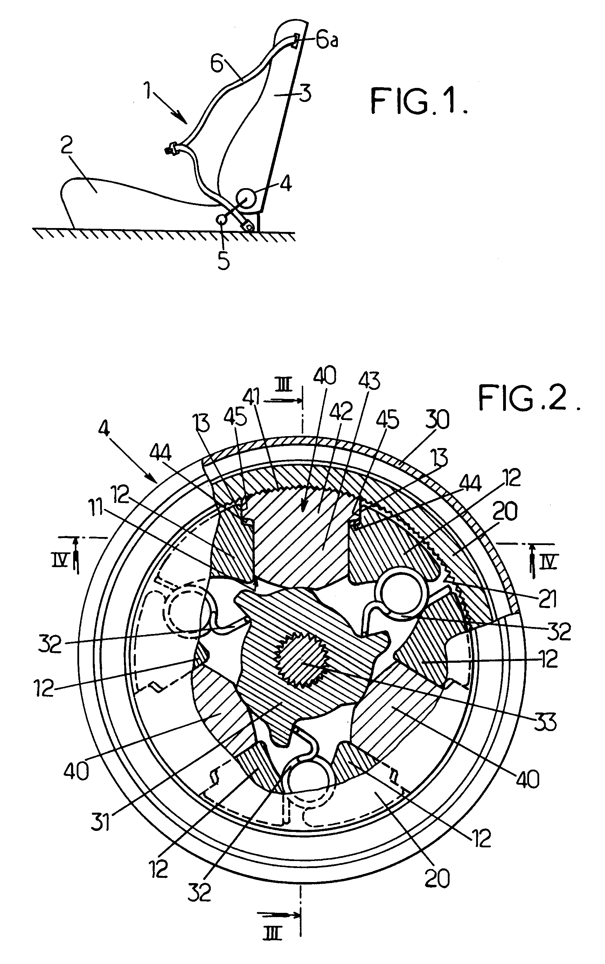

La figure 1 représente un siège 1 de véhicule, notamment de véhicule automobile, qui comporte une assise 2 et un dossier 3 monté pivotant sur l'assise 2 au moyen d'une articulation 4.

Lorsqu'un utilisateur du siège 1 veut régler l'inclinaison du dossier 3, il actionne une manette 5 ou un autre organe de commande pour débloquer l'articulation 4, puis il procède au réglage de l'inclinaison voulue en agissant directement sur le dossier 3, après quoi il relâche la manette 5, ce qui bloque à nouveau l'articulation 4.

Le siège peut éventuellement comporter une articulation 4 similaire sur chacun de ses côtés, les deux articulations étant alors de préférence commandées par la même manette 5.

Eventuellement, le siège 1 peut également comporter une ceinture de sécurité 6 dite "embarquée", qui est en liaison mécanique avec la partie supérieure du dossier 3 du siège. Cette liaison mécanique consiste généralement en un montage coulissant de la ceinture 6 dans une ouverture 6a ménagée sur un côté du dossier 3, la ceinture 6 se prolongeant au-delà de cette ouverture 6a à l'intérieur du dossier 3, jusqu'à un enrouleur (non représenté).

L'articulation 4 est représentée plus en détail sur les figures 2 à 4.

Cette articulation comprend, de façon connue en soi :
- un flasque métallique 10 dit fixe, qui est solidarisé avec l'armature de l'assise 2 du siège,
- un flasque métallique 20 dit mobile, qui est solidarisé avec l'armature du dossier 3 du siège et qui pivote autour de l'axe de rotation X de ce dossier, les flasques fixe et mobile formant ensemble un boîtier rond, et le flasque mobile 2 comportant une denture circulaire 21 orientée radialement vers l'intérieur et disposée à l'intérieur du boîtier,
- une couronne de tôle métallique 30 qui est sertie sur le pourtour du flasque fixe 10 et qui recouvre partiellement le flasque mobile 20 pour fermer le boîtier et maintenir les deux flasques l'un contre l'autre,
- trois grains métalliques 40, pourvus chacun d'une denture extérieure 41 propre à coopérer avec la denture intérieure 21 du flasque mobile 20, ces trois grains étant guidés en coulissement radial dans des rainures de guidage 11 ménagées entre des bossages 12 qui appartiennent au flasque fixe et qui font saillie à l'intérieur du boîtier,
- une came 31 métallique, rotative autour de l'axe X et agissant sur les trois grains 40, cette came 31 étant déplaçable angulairement entre d'une part une position de repos où elle repousse les grains vers une position d'engagement dans laquelle les dentures extérieures 41 de ces grains coopèrent avec la denture intérieure 21 du flasque mobile pour immobiliser ledit flasque mobile, et d'autre part une position d'actionnement où ladite came permet aux grains 40 de reculer vers une position effacée dans laquelle leurs dentures extérieures ne coopèrent plus avec la denture intérieure du flasque mobile,
- trois ressorts métalliques 32 qui sollicitent la came vers sa position de repos,
- et un arbre 33 lié à la manette 5, cet arbre s'étendant longitudinalement selon l'axe X et étant solidaire de la came 31.

Ainsi, lorsqu'un utilisateur actionne la manette 5 en faisant tourner la came 31 vers sa position d'actionnement, les grains 40 sont libres de reculer vers leur position effacée, ce qui permet la rotation du flasque mobile 20, donc le réglage de l'inclinaison du dossier du siège.

Lorsque l'utilisateur a réglé l'inclinaison du dossier, il relâche la manette 5, de sorte que la came revient dans sa position de repos sous l'acticn des ressorts 32, ce qui ramène les grains 40 dans leur position d'engagement, lesquels grains bloquent alors la rotation du flasque mobile 20 et du dossier 3.

Selon l'invention, chaque grain 40 comporte, d'une part, une tête 42 qui est relativement large dans une direction orthoradiale et qui comporte la denture extérieure 41, et, d'autre part, un corps de guidage 43 plus étroit dans la direction orthoradiale, la came 31 agissant contre l'extrémité de ce corps de guidage.

La tête élargie 42 est séparée du corps de guidage 43 par deux épaulements 44 qui sont disposés de part et d'autre du grain 40, et qui sont orientés à l'opposé de la denture 41, et elle comporte en outre latéralement deux faces de butée 45 qui coopèrent avec deux faces de contrebutée 13 appartenant à une portion élargie de la rainure de guidage 11 qui reçoit la tête élargie 42 du grain.

Chaque face de butée 45 s'étend parallèlement à la direction de coulissement du grain depuis le voisinage de la denture 41 de ce grain jusqu'à un des épaulements 44.

Lorsqu'un couple de pivotement autour de l'axe X est exercé sur le flasque mobile 20 pendant que les grains 40 sont dans leur position d'engagement, ce couple est repris par la denture extérieure 41 des grains 40, et il se traduit par un effort orthoradial sur les grains.

Cet effort orthoradial est repris essentiellement par l'appui d'une des faces de butée 45 de chaque grain contre la face de contrebutée 13 correspondante, les corps de guidage 43 des grains ne reprenant normalement quasiment pas cet effort orthoradial.

En effet, d'une part, un jeu latéral suffisant est prévu entre ces corps de guidage 43 et les rainures de guidage 11 correspondantes, et d'autre part, la longueur de guidage du corps de guidage 43 dans la rainure de guidage 11 est suffisamment limitée, compte tenu du jeu latéral, pour autoriser un certain pivotement du grain 40 autour d'un axe parallèle à l'axe X lorsque la denture extérieure 41 du grain subie un effort orthoradial.

Par ailleurs, les grains 40 sont réalisés dans un matériau plus dur que les bossages 12 du flasque fixe 10, ou tout au moins les faces de butée 45 des grains sont plus dures que les faces de contrebutée 13 correspondantes.

Ainsi, comme représenté sur la figure 5, lorsque le flasque mobile 20 subit un couple de pivotement C autour de l'axe X qui est supérieur à une valeur minimum prédéterminée C0, notamment en cas d'accident du véhicule dans lequel est installé le siège 1, l'une des faces de butée 45 de chaque grain pénètre dans la face de contrebutée 13 correspondante.

Cette pénétration a lieu sur une épaisseur e qui peut être par exemple supérieure à 0,2 millimètres, de préférence supérieure à 0,3 millimètres, par exemple comprise entre 0,3 et 0,5 millimètres, sans que le guidage du corps de guidage 43 dans la rainure de guidage 11 correspondante interfère avec cette pénétration.

De cette façon, le recul des grains 40 vers leur position effacée est empêché par les faces de butée 45 et les épaulements correspondants 44 des grains, qui sont coincés du fait de leur pénétration dans les faces de butée correspondantes 13.

Le couple minimum C0, à partir duquel l'une des faces de butée 45 de chaque grain pénètre dans la face de contrebutée 13 correspondante, peut être par exemple compris entre 50 mdaN et 200 mdaN, ou éventuellement compris entre 100 mdaN et 200 mdaN.

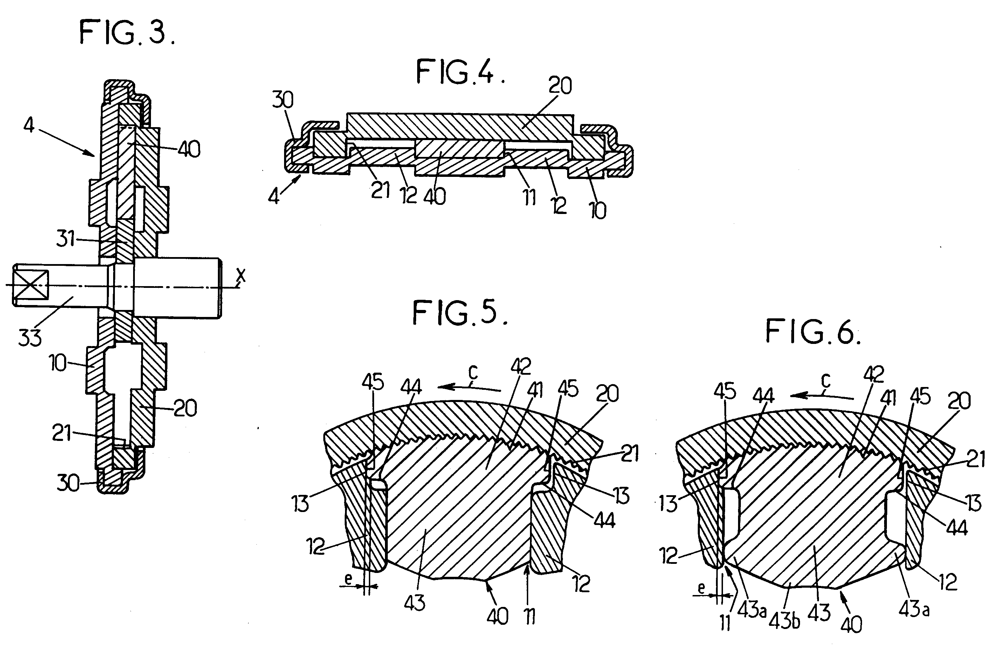

En variante, comme représenté sur la figure 6, le guide 11 pourrait ne pas comporter de rétrécissement et le corps de guidage 43 pourrait comporter deux élargissements latéraux 43a au voisinage de l'extrémité 43b du corps de guidage qui coopère avec la came.

Dans cette variante, le guidage radial des grains (40) est obtenu par la coopération des surfaces de butée 45 et des élargissements 43a avec les guides 11.

La variante de la figure 6 est par ailleurs similaire à la forme de réalisation des figures 2 à 5, et elle fonctionne de la même façon.

Comme il va de soi, l'invention n'est pas limitée aux exemples particuliers qui viennent d'être décrits ; elle en embrasse au contraire toutes les variantes, notamment celles dans lesquelles :
- l'articulation comporterait un nombre de grains 40 différent de trois et au moins égal à un,
- l'articulation comporterait un nombre de ressorts 32 différent de trois et au moins égal à un,
- le siège ne comporterait pas de ceinture "embarquée" 6.

## Revendications

1. Articulation destinée à équiper un siège de véhicule (1) qui comprend une assise (2) et un dossier (3) pivotant par rapport à l'assise, cette articulation comportant :
- des premier et deuxième flasques (10, 20), destinés à être solidarisés l'un avec l'assise (2) du siège et l'autre avec le dossier (3) du siège et montés pivotants l'un par rapport à l'autre autour d'un axe de rotation (X), le deuxième flasque étant solidaire d'une denture (21) qui s'étend sur au moins un arc de cercle centré sur l'axe de rotation (X) et qui est orientée radialement vers l'intérieur,
- au moins un grain (40) pourvu d'une denture extérieure (41), propre à coopérer avec la denture (21) du deuxième flasque, ce grain étant guidé en coulissement selon une direction radiale, par un guide (11) solidaire du premier flasque, entre d'une part une position d'engagement où le grain (40) coopère avec la denture (21) du deuxième flasque pour bloquer l'articulation, et d'autre part une position effacée où il ne coopère pas avec la denture du deuxième flasque,
- une came (31) pour commander le coulissement du grain, cette came étant sollicitée par des moyens élastiques (32) vers une position de repos où elle place le grain (40) dans sa position d'engagement,
- et un organe de commande (33) pour déplacer la came de sa position de repos vers une position d'actionnement où elle permet au grain de coulisser vers sa position effacée,
**caractérisé en ce que** le grain (40) présente deux faces de butée (45) opposées qui s'étendent depuis le voisinage de la denture (41) de ce grain jusqu'à un épaulement (44) disposé à l'opposé de ladite denture du grain et situé près de cette denture, au moins les faces de butée (45) du grain présentant une grande résistance mécanique, le guide (11) comportant deux faces de contrebutée (13) qui sont disposées respectivement en regard des deux faces de butée (45) et de leurs épaulements (44) et qui présentent une résistance mécanique inférieure à la résistance des faces de butée (45),
**et en ce que**, lorsque le grain (40) est dans sa position d'engagement, les faces de butée (45) et de contrebutée (13) en regard sont en contact mutuel sur une surface suffisamment faible pour qu'une des faces de butée (45) du grain pénètre alors dans la face de contrebutée (13) correspondante du guide lorsque l'un des flasques (10, 20) subit un couple de pivotement (C) autour de l'axe de rotation (X) qui est supérieur à un couple minimum prédéterminé.

2. Articulation selon la revendication 1, dans laquelle le couple minimum prédéterminé est compris entre 50 mdaN et 200 mdaN.

3. Articulation selon la revendication 2, dans laquelle le couple minimum prédéterminé est compris entre 100 mdaN et 200 mdaN.

4. Articulation selon l'une quelconque des revendications précédentes, dans laquelle la surface de contact entre chaque face de butée (45) et la face de contrebutée (13) correspondante est prévue pour que, lorsque l'un des flasques (10, 20) subit un couple (C) au moins égal au couple minimum prédéterminé pendant que le grain (40) est dans sa position d'engagement, l'une des faces de butée de ce grain pénètre dans la face de contrebutée correspondante sur une profondeur au moins égale à 0,2 millimètres.

5. Articulation selon la revendication 4, dans laquelle la profondeur de pénétration de la face de butée (45) dans la face de contrebutée (13) est comprise entre 0,3 et 0,5 millimètres.

6. Articulation selon l'une quelconque des revendications précédentes, dans laquelle le grain se prolonge vers la came par un corps de guidage (43) qui coulisse dans le guide (11) avec un jeu suffisant pour ne pas interférer avec la pénétration susmentionnée d'une des faces de butée (45) du grain dans la face de contrebutée (13) correspondante.

7. Siège de véhicule comportant une assise (2) et un dossier (3) qui est monté pivotant par rapport à l'assise par l'intermédiaire d'au moins une articulation (4) selon l'une quelconque des revendications précédentes.

8. Siège de véhicule selon la revendication 7, comportant en outre une ceinture de sécurité (6) qui est en liaison mécanique avec le dossier (3) en un emplacement (6a) de ce dossier éloigné de l'assise (2).

## Claims

1. Articulation which is intended to equip a vehicle seat (1) which comprises a seat part (2) and a backrest (3) which pivots with respect to the seat part, this articulation having:
- first and second flanges (10, 20), one of which is intended to be joined to the seat part (2) of the seat, and the other of which is intended to be joined to the backrest (3) of the seat, and these flanges being mounted so as to pivot with respect to one another about an axis of rotation (X), the second flange being integral with a toothing (21) which extends over at least an arc of a circle centred on the axis of rotation (X), and which is oriented radially inwards,
- at least one cam roller (40) provided with an external toothing (41), capable of cooperating with the toothing (21) of the second flange, this cam roller being guided by sliding in a radial direction, by way of a guide (11) integral with the first flange, between, on the one hand, an engagement position in which the cam roller (40) cooperates with the toothing (21) of the second flange in order to block the articulation, and, on the other hand, a withdrawn position in which it does not cooperate with the toothing of the second flange,
- a cam (31) for controlling the sliding of the cam roller, this cam being stressed by elastic means (32) towards a rest position in which it places the cam roller (40) in its engagement position,
- and a control member (33) for displacing the cam from its rest position towards an activation position in which it allows the cam roller to slide towards its withdrawn position,
characterized in that the cam roller (40) has two opposite abutment faces (45) which extend from the vicinity of the toothing (41) of this cam roller as far as a shoulder (44) which is arranged opposite the said toothing of the cam roller and is situated near this toothing, at least the abutment faces (45) of the cam roller presenting a high mechanical strength, the guide (11) including two counter-abutment faces (13) which are respectively arranged facing the two abutment faces (45) and their shoulders (44) and which present a mechanical strength which is inferior to the strength of the abutment faces (45),
and in that when the cam roller (40) is in its engagement position, the mutually facing abutment (45) and counter-abutment (13) faces are in mutual contact over a surface area which is sufficiently small to ensure that one of the abutment faces (45) of the cam roller penetrates into the corresponding counter-abutment face (13) of the guide when one of the flanges (10, 20) is subjected to a pivoting torque (C), around the axis of rotation (X), which is greater than a predetermined minimum torque.

2. Articulation according to Claim 1, in which the predetermined minimum torque is between 50 daN.m and 200 daN.m.

3. Articulation according to Claim 2, in which the predetermined minimum torque is between 100 daN.m and 200 daN.m.

4. Articulation according to any one of the preceding claims, in which the contact surface between each abutment face (45) and the corresponding counter-abutment face (13) is designed so that when one of the flanges (10, 20) is subjected to a torque (C) at least equal to the predetermined minimum torque while the cam roller (40) is in its engagement position, one of the abutment faces of this cam roller penetrates into the corresponding counter-abutment face by a depth which is at least equal to 0.2 millimetres.

5. Articulation according to Claim 4, in which the depth of penetration of the abutment face (45) into the counter-abutment face (13) is between 0.3 and 0.5 millimetres.

6. Articulation according to any one of the preceding claims, in which the cam roller continues in the direction of the cam via a guide body (43) which slides in the guide (11) with a play which is sufficient to ensure that there is no interference with the abovementioned penetration of one of the abutment faces (45) of the cam roller into the corresponding counter-abutment face (13).

7. Vehicle seat which includes a seat part (2) and a backrest (3) which is mounted so as to pivot with respect to the seat part by way of at least one articulation (4) according to any one of the preceding claims.

8. Vehicle seat according to Claim 7, additionally including a seat belt (6) which is in mechanical connection with the backrest (3) at a site (6a) of this backrest remote from the seat part (2).

## Patentansprüche

1. Gelenkverbindung für einen Fahrzeugsitz (1), der eine Sitzfläche (2) und eine Rückenlehne (3) aufweist, die in Bezug auf die Sitzfläche schwenkbar ist, wobei diese Gelenkverbindung aufweist:
- einen ersten und einen zweiten Flansch (10, 20), von denen einer fest an der Sitzfläche (2) des Sitzes und der andere an der Rückenlehne (3) des Sitzes befestigt wird und die um eine Drehachse (X) schwenkbar zueinander angeordnet sind, wobei der zweite Flansch fest mit einer Zahnung (21) verbunden ist, die sich über mindestens einen auf die Drehachse (X) zentrierten Kreisbogen erstreckt und radial nach innen ausgerichtet ist,
- mindestens ein Blockierorgan (40) mit einer Außenzahnung (41), die mit der Zahnung (21) des zweiten Flansches zusammenwirkt, wobei dieses Blockierorgan von einer fest mit dem ersten Flansch verbundenen Führung (11) in einer radialen Richtung zwischen einerseits einer Eingriffsstellung, in der das Blockierorgan (40) mit der Zahnung (21) des zweiten Flansches zusammenwirkt, um die Gelenkverbindung zu blockieren, und andererseits einer zurückgezogenen Stellung gleitend geführt wird, in der es nicht mit der Zahnung des zweiten Flansches zusammenwirkt,
- eine Nocke (31), um das Gleiten des Blockierorgans zu steuern, wobei diese Nocke von elastischen Mitteln (32) in eine Ruhestellung gezogen wird, in der sie das Blockierorgan (40) in seine Eingriffsstellung bringt,
- und ein Steuerorgan (33), um die Nocke aus ihrer Ruhestellung in eine Betätigungsstellung zu bringen, in der sie es dem Blockierorgan erlaubt, in seine zurückgezogene Stellung zu gleiten,
dadurch gekennzeichnet, daß das Blockierorgan (40) zwei entgegengesetzte Anschlagseiten (45) aufweist, die sich von der Nähe der Zahnung (41) dieses Blockierorgans bis zu einer Schulter (44) erstrecken, die entgegengesetzt zur und nahe der Zahnung des Blockierorgans angeordnet ist, wobei mindestens die Anschlagseiten (45) des Blockierorgans einen großen mechanischen Widerstand aufweisen, wobei die Führung (11) zwei Gegenanschlagseiten (13) aufweist, die je vor den beiden Anschlagseiten (45) bzw. ihren Schultern (44) angeordnet sind und die einen mechanischen Widerstand aufweisen, der geringer ist als der Widerstand der Anschlagseiten (45),
und daß, wenn das Blockierorgan (40) sich in seiner Eingriffsstellung befindet, die Anschlagseiten (45) und die gegenüberliegenden Gegenanschlagseiten (13) sich über eine Fläche in gegenseitigem Kontakt befinden, die klein genug ist, damit eine der Anschlagseiten (45) des Blockierorgans dann in die entsprechende Gegenanschlagseite (13) der Führung eindringt, wenn einer der Flansche (10, 20) ein Schwenkmoment (C) um die Drehachse (X) erfährt, das größer ist als ein vorbestimmtes minimales Moment.

2. Gelenkverbindung nach Anspruch 1, bei der das vorbestimmte minimale Moment zwischen 50 mdaN und 200 mdaN liegt.

3. Gelenkverbindung nach Anspruch 2, bei der das vorbestimmte minimale Moment zwischen 100 mdaN und 200 mdaN liegt.

4. Gelenkverbindung nach einem beliebigen der vorhergehenden Ansprüche, bei der die Kontaktfläche zwischen jeder Anschlagseite (45) und der entsprechenden Gegenanschlagseite (13) so ausgebildet ist, daß, wenn einer der Flansche (10, 20) ein Moment (C) mindestens gleich dem vorbestimmten minimalen Moment erfährt, während das Blockierorgan (40) sich in seiner Eingriffsstellung befindet, eine der Anschlagseiten dieses Blockierorgans in die entsprechende Gegenanschlagseite über eine Tiefe eindringt, die mindestens 0,2 Millimeter beträgt.

5. Gelenkverbindung nach Anspruch 4, bei der die Eindringtiefe der Anschlagseite (45) in die Gegenanschlagseite (13) zwischen 0,3 und 0,5 Millimeter liegt.

6. Gelenkverbindung nach einem beliebigen der vorhergehenden Ansprüche, bei der das Blockierorgan sich zur Nocke hin durch einen Führungskörper (43) verlängert, der in der Führung ((11) mit einem Spiel gleitet, das ausreichend ist, um nicht mit dem erwähnten Eindringen einer der Anschlagseiten (45) des Blockierorgans in die entsprechende Gegenanschlagseite (13) zu interferieren.

7. Fahrzeugsitz mit einer Sitzfläche (2) und einer Rückenlehne (3), die in Bezug auf die Sitzfläche mittels mindestens einer Gelenkverbindung (4) gemäß einem beliebigen der vorhergehenden Ansprüche schwenkbar montiert ist.

8. Fahrzeugsitz nach Anspruch 7, der weiter einen Sicherheitsgurt (6) aufweist, der mit der Rückenlehne (3) an einer Stelle (6a) dieser Rückenlehne in mechanischer Verbindung steht, die von der Sitzfläche (2) entfernt ist.
